# EUROPEAN PATENT APPLICATION

(11) **EP 3 734 445 A1**
(43) Date of publication of application: **04.11.2020**
(21) Application number: 19171949.1
(22) Date of filing: 30.04.2019
(51) Int. Cl.: G06F 8/65, B66B 1/00, G06F 21/57

(54) **SECURE AND RELIABLE REMOTE UPDATE OF A CONTROL DEVICE IN AN ELEVATOR**

(71) Applicant: Inventio AG, 6052 Hergiswil (CH)
(72) Inventor: CARRIERO, Stefano, 6330 Cham (CH)

(57) **Abstract**

In one aspect the invention relates to a method for reliably and remotely updating a control device (CD) for a people transportation system (in particular an elevator) operated with control software, wherein for updating the control software packages are stored and provided on a repository (REP) and wherein the update is controlled by a server (RUMS), which is informed about the current status of the packages, being installed on the control device (CD), comprising receiving (S1) a trigger signal from the server (RUMS), wherein the trigger signal comprises an update instruction of a set of packages to be updated and an address for accessing the repository (REP), where the at least one package to be updated is stored; downloading (S6) each package from the repository (REP) at the received address individually until all packages are downloaded, thereby checking integrity (S7) of each downloaded package, if it has been evaluated for each package that the package does not already exist on the control device (CD); verifying (S8-1) if all packages of the set have been downloaded successfully as instructed and in the affirmative: installing (S8-2) all downloaded and checked packages; and finally sending (S9) a report message (r) to the server (RUMS).

## Description

The present invention relates to secure update procedures of a controller of an elevator system and refer in particular to a method for securely and remotely updating a control device of a people transportation system, like an elevator or escalator, a control device, a system and a computer program.

Modern elevator systems are based on distributed intelligence in the form of device controllers, such as microprocessors, located at the elevator system. Such control device is operated with software. From time to time this software needs to be updated for bugfixing, new features, change of functionality e.g. due to update of lift regulations, etc.

In state of the art two main approaches are known for updating software. A first approach is to download the entire software image to the device (in one run). A disadvantage of this approach is that a huge amount of data needs to be transferred each time anew, because usually only a portion of software packages need to be updated and the others may remain unchanged. A second approach is to reduce the data transfer by only downloading those software packages that have changed or which are new, compared to the installed version (so called delta update).

Systems and tools supporting in software updates are known in state of the art. An "Advanced Packaging Tool (APT)" is a free-software user interface that works with core libraries to handle the installation and removal of software on Debian, Ubuntu, and related Linux distributions. APT simplifies the process of managing software on Unix-like computer systems by automating the retrieval, configuration and installation of software packages, either from precompiled files or by compiling source code.

Further, the system RPM Package Manager (RPM) is known as packager management system. An RPM package can contain arbitrary set of files. Most RPM files are "binary RPMs" (or BRPMs) containing the compiled version of a software. There are also "source RPMs" (or SRPMs) containing the source code used to build a binary package. These have an appropriate tag in the file header that distinguishes them from normal binary files, causing them to be extracted to a special installation folder.

The Debian package "dpkg" provides computer programs necessary for run-time functioning of the packaging system.

Although all of the above-mentioned tools show the advantage that only a reduced amount of data needs to be transferred, because they are directed to manage packages of the software product, they may not be applied to the control of transportation systems due to the following reasons.

Generally, elevator systems may not only be used for transportation of goods but mainly for people and therefore need to fulfil very high security requirements. In high-rise high buildings it is of overall importance to make sure that the control of the elevator system works without failure and corruption in order to safeguard the well-being and health of the people. That is why it is important that a recovery mechanism may be provided which assures that the software is always in a consistent state, also in case a download of a software package fails due to an interruption or deterioration of the data communication channel to the server from where the packages are to be downloaded. Further, the software update needs to be initiated and started without manual interaction of service personal in order to keep the costs low. However, the update procedure needs to be traceably monitored and controlled by an authorized entity, which usually is separate from a repository which serves as download server and where the packages are stored and provided for download.

Moreover, the software packages may have dependencies with respect to each other. Thus, for example a first package requires another second package to be installed in order to be correctly executed or a third package needs a special library etc. Therefore, it is to be assured that the installed software is always in a secure state, in which all dependencies are dissolved.

It is therefore an object of the present invention to provide a solution for remote and secure update of control software on a control device for control of a transportation system like an elevator.

This object is solved by a method for remote and secure update of a control device, a control device, by a system, by a computer program and respective product and a computer readable medium according to the appended independent claims. Advantageous aspects, features and embodiments are described in the dependent claims and in the following description together with further advantages.

In the following the solution according to the invention is described with respect to the claimed method. Features, advantages or alternative embodiments herein can be assigned to the other claimed objects (e.g. the control device, the computer program product) and vice versa. In other words, claims for the apparatuses can be improved with features described or claimed in the context of the methods and vice versa. In this case, the functional features of the method are embodied by structural units, in particular microprocessor units of an integrated circuit of the device and vice versa, respectively. This is possible, because, generally in computer science, a software implementation and a corresponding hardware implementation are equivalent. Thus, for example, a method step for "storing" data may be performed with a storage unit and respective instructions to write data into the storage. For the sake of avoiding redundancy, although the device may also be used in the alternative embodiments described with reference to the method, these embodiments are not explicitly described again for the device.

In one aspect the invention relates to a method for reliably and remotely updating a control device of a people transportation system (in particular an elevator) operated with control software, wherein for updating the control software, (software) packages are stored and provided on a repository, wherein the update is controlled by a server, which is separate from the repository and which is informed about the current status of the packages, being installed on the control device, comprising the method steps, being executed on the control device:
- Receiving a trigger signal from the server, wherein the trigger signal comprises an update instruction for a set of packages (comprising at least one package) to be updated; the update instructions comprises an address for accessing the repository, where the at least one package to be updated is stored; in other embodiments, the update instruction may comprise additional metainformation for instructing the control device to process with respect to the updating procedure (e.g. conditions and time intervals for downloading etc.);
- Determining for each package, if that package does not already exist on the control device and in case it does not exist: Downloading the package from the repository individually until all packages are downloaded, thereby checking integrity of each downloaded package;
- Verifying if all packages of the set have been downloaded successfully as instructed and preferably data integrity it is also checked for the (successfully) downloaded packages and in the affirmative:
- Installing all downloaded and checked packages;
- Sending a report message to the server. Thus, the server stays always informed about the current status of the packages on the control device by receiving the report message.

One important aspect of the invention is to be seen in that the method provides a reliable procedure for a set of packages that needs to be installed on the control device, wherein each package in the set of packages may be provided in different versions. The versions of the packages need to be checked if they comply with each other. The versions typically have mutual dependencies. This makes it necessary to ensure the compatibility of the package versions to be updated. The compatibility check is automatically executed e.g. by a list of packages and versions that is stored in the corresponding folder of each version on the repository. The so called "packages.index" file contains all the packages and their version, that belong to a respective overall software release. The software release is what has been tested and is proven to have no compatibility issues. This has two major technical advantages. First, the security is improved, because a version compatibility may be assured automatically and thus a recovery mechanism is provided. The recovery mechanism assures that the software with the currently installed packages is always in a consistent state. Second, the remote management for the software deployment may be made scalable und much more flexible by safeguarding safety. "Scalable" in this respect refers to the fact that the control of the deployment and update procedure is at the (central) server. The server may, thus, be instructed to instruct the update procedure by means of sending the trigger signal to a group of control devices according to a deployment pattern. This also allows to deploy the software globally on a set of control devices for a set of transportations systems according to pre-defined rules. For example, it is possible to define a set of control devices as pilot group, deploy the software packages thereon. Then it may be examined if no issues appear after a predefined observation period. If no problems arise, the same software packages may be deployed to a larger group (e.g. country or zone).

In a preferred embodiment downloading each package individually is executed such as a retry mechanism is applied, wherein the retry mechanism instructs another download operation from the repository for the respective package in case the respective package was not downloaded correctly and wherein the retry mechanism may be re-iterated for a number of pre-configured times for each package. This makes the update procedure more efficient and reliable as well, because an update may even be completed in case one of the packages could not be downloaded correctly or completely for a pre-configured number of times, because the retry mechanism may be applied.

In another embodiment, after receiving the trigger signal, the method further comprises:
- Checking if update parameters are valid.

The update parameters may comprise a format, syntax and/or time-related parameters. This feature has the advantage that security may be improved as incorrect update parameters may be detected and reported. Typically, the parameter settings are always the same and should not need an "agreement" upfront for example in a configuration phase.

According to another preferred embodiment of the invention, after receiving the trigger signal the method further comprises:
- Checking if the repository is available.

This may include verifying accessibility of the repository and/or of the network connection. In particular, the control device to be updated shall check if the repository is available or reachable through the internet. This can be done by checking the presence of the index file without downloading it. E.g. on Linux the instruction 'wget --spider' may be used. When invoked with this option, Wget will behave as a Web spider, which means that it will not download the contents, but will just check whether or not they are accessible. The technical advantage is that unnecessary data transfer to the repository may be avoided and security may be improved as failed network connections may be avoided.

According to another preferred embodiment of the invention, after receiving the trigger signal the method further comprises:
- Updating a configuration file locally at the control device.

The configuration file comprises information that is required by a software package management system. This software package management system may be deployed or used on the control device and is a piece of software that orchestrates the downloading, verification and installation of the software packages.

According to another preferred embodiment of the invention, after receiving the trigger signal the method further comprises:
- Downloading an index file with a list of available packages from the repository. The index file may comprise a checksum (e.g. SHA256) for checking integrity of the downloaded package on the control device. This helps to improve security and reliability of the update procedure.

In a preferred embodiment, the method processes the received index file package per package and evaluates, whether the respective package is new (i.e. an update package) and is not already installed on the control device (is not already stored in a temporary file structure on the device). If NOT (not locally available), the respective package is downloaded from the repository.

Preferably, the invention uses at least two different condition-controlled loop structures (DO-WHILE or REPEAT-UNTIL) to control the data flow.

A first loop structure refers to the verification of a successful download of all packages. In particular, this first loop structure is used after having received the package on the control device for verification of its successful downloading. Generally, a package download can be successful or not. If the download is not successful, it shall be repeated (retry mechanism). However, even if a download result is successful, the integrity of the package is not guaranteed. Hence, this is why a second loop is used and run to check the integrity (e.g. with SHA256).

Thus, the integrity is checked in a second loop, which is different from the first loop and thus integrity is checked not in the same loop as the download verification. In checking the integrity, the second loop structure will be applied. If the integrity check determines, that the respective received package is compromised or otherwise damaged or not fully received (i.e. due to data connection interruption), then a retry mechanism will be executed for retrying to download the respective package for a number of pre-defined times. This feature has the technical advantage in practice that the update process may be made much more efficient, as the update procedure may even be finalized correctly in case a single download process for a package failed for one or two (or more) times. Otherwise, in the known update procedures, in this case, the update would be interrupted and could not be finalized correctly, leading to an inconsistent software state with potential compatibility issues due to unresolved dependencies, because some packages were already updated and others not. By using the update method according to this invention, this could only happen if the installation of a package fails, which is very unlikely to happen (especially compared to failed file download).

If all verification and checking steps have a positive result, installation of the packages will be executed. The installation of the package may preferably be executed in a third loop structure.

According to another preferred embodiment of the invention, after successful installation of the packages the method further comprises:
- Rebooting the control device. This has the advantage that the control device may be commissioned and operated directly after having finalized the update procedure. With this step, the control device may be operated more efficiently without any interruptions.

According to another preferred embodiment of the invention, a watchdog, which is deployed on the control device for preventing unintended software behaviors is disabled before installing the packages and enabled again after all packages have been completely and correctly installed. This improves security of the system.

Generally, a watchdog is an independent electronic circuit that is connected to the reset pin of the central processing unit (CPU). A program on the CPU makes sure that the watchdog timer is refreshed in time. If the watchdog timer is not refreshed in time, the device is reset automatically. This is needed to recover the device from malfunctions. However, during the software update, it would be fatal for the device if it would be reset while writing into non-volatile memory (NVM), as it would damage the NVM. For safety reasons, it is therefore foreseen to disable the watchdog functionality before starting with the installation of the packages (writing into NVM). When the installation is finished (no more writing into the NVM), the watchdog function can be enabled again.

According to another preferred embodiment of the invention, the watchdog is only disabled in case it has been verified in a preceding verification step that all packages which have been downloaded show integrity and are not corrupted. This further improves security of the system.

According to another preferred embodiment of the invention after each or selected steps of the update procedure a confirmation signal is sent to the server in case the step has been executed completely and correctly or not. This makes the system more reliable as the server is always informed about each step.

According to another preferred embodiment of the invention at least the trigger signal and/or the report message comprise a clock segment. The clock segment is used on the different entities (server, control device) to synchronize their system clocks (system date and time). In addition, or alternatively the clock segment may indicate a time point at which the respective procedure (update procedure) should be executed or has been executed (report). This improves flexibility of the system and makes it possible that the update procedure is controlled on a time-based and/or event-based manner.

In another aspect the invention relates to a control device for a people transportation system, wherein the control device is operated with control software, comprising:
- A memory for storing control software for operating the control device;
- A processor for executing the control software;
- A server interface to a server, wherein the server is adapted to control a software update procedure;
- A repository interface to a repository for storing update packages of the control software;
- wherein the processor is further adapted to execute a reliable and remote software update procedure according to the method described above.

In another aspect the invention relates to a system for a reliable and remote update of control software on a control device, with:
- A control device as mentioned above;
- A server, which is adapted to trigger the update procedure and is informed about the current status of the software update packages, being installed on the control device;
- A repository, which is adapted to store update packages.

The invention may also be embodied in a computer program product comprising program elements which induce processor to carry out the steps of the method for reliable and remote update of control software, when the program elements are loaded into a memory of the processor.

The invention may also be embodied in a computer-readable medium on which program elements are stored that can be read and executed by a processor, in order to perform steps of the method for a reliable and remote software update procedure.

The realization of the invention by a computer program product and/or a computer-readable medium has the advantage that already existing servers or control devices can be easily adopted by software updates in order to work as proposed by the invention.

In the following a definition of terms used within this application is given.

A control device is an electronic device which is operated for controlling operation of a transportation system, like an elevator or an escalator. It may be a wireless gateway.

The control device is operated with control software, firmware or other forms of computer programs or instructions. The control software may comprise packages, which may be provided in different versions. The versions of the packages may have dependencies such as the control device is composed of several dependent or independent software packages.

The update procedure is initiated by a remote instance, by a server or control center. The software packages are provided on remote data storage, a repository, which may be in direct data connection with the server. When a package has been downloaded and needs to be installed, installation may involve overwriting old versions of executable files and libraries, updating configuration files to preserve site-specific settings while providing any new configuration parameters required by the new version of software, and recording software version information in a data structure (e.g. deployed on the server) so that a subsequent update cycle can also proceed correctly.

The step of verifying if all packages of the set have been downloaded successfully as instructed preferably comprises or is followed by a checking step, namely checking data integrity for the (successfully) downloaded packages. With this feature, security may be improved.

The updates with software packages are stored in a repository, e.g. a central database, accessible via a networked connection. This repository can be designed to withstand high amounts of simultaneous download requests, whereas a server doesn't have this requirement. The update procedure is controlled by another entity: a server, being different from the repository.

A status of the control device relates to a status or image of installed versions of software packages. For example, if a first package may be provided in a first version, a second package may be provided in a first version, a third package may be provided in a third version and so on and so forth. However, the first version of the first package is incompatible with the third version of the third package. Therefore, it is necessary that always a consistent state may be provided on the control device. This consistency information is typically provided by the server. The consistency information may be provided in the trigger signal. The consistency information may comprise dependency information, which represents the dependencies of the software packages. The dependency information may be provided in the index file. The dependency information may contain entries for software packages that is/are required to run the software but which is not included in the set of packages. Such required software represents "dependencies" and frequently include such items as language libraries and common object class libraries. A dependency can also be another software package. The dependencies are stored in the index file. Each package listed in the index file has zero, one or multiple dependency packages listed. The software dependencies may also be stored in a table or in a recursive tree format, i.e. as a directed graph. The checking of the update parameters comprises an evaluation whether the provided repository name corresponds to a predefined pattern and whether the provided software version parameter is newer than the current software version (currently installed and used on the control device). Predefined pattern can be stored in a storage, provided locally or via a network connection.

The configuration file is the basis on top of which the subsequent processes rely. The configuration file comprises instructions for requesting the software updates from the repository and for processing the same. It may comprise verified parameters that were submitted with the trigger signal (i.e. repository URL, SW version) and options that shall be used during the update procedure, such as destination folder for the downloaded files, allowed protocols for the download (e.g. http, https, ftp, ftps, etc.). The configuration file represents what shall be installed. A status of the installed software is preferably stored in a separate versioning file on the control device. If the software update process is successful, the software version mentioned in the configuration file should match the software version in the separate versioning file.

The current software version number is preferably transmitted to the server.

The index file is downloaded from the repository. Although this step is not mandatory and there may exist embodiments of the invention (e.g. other structure, other operating system) in which the method is applied without such index file, it has the technical advantage that it simplifies and speeds up the process, because it contains all the relevant information in one place. It comprises information such as package name, version, dependencies, size, installed-size, checksum (e.g. SHA256), description, etc.

Although the procedure outlined above is stated in reference to "updating" a software package (i.e. replacing a currently-installed version of the package with a newer version of similar functionality), it can equally well be applied to installing a new software package, where "updating" can be seen as installing new software packages for providing a new functionality. This is important because some software updates may introduce new dependencies between packages. For example, a first version of package "A" may not require any functionality provided by any other software package. However, a new version of package "A" may require another package, "B," to operate correctly. Thus, "A" cannot be updated unless "B" is also installed. If "B" is missing from the client system, the update procedure must download it and install it before the update to package "A" can be completed.

The properties, features and advantages of this invention described above, as well as the manner they are achieved, become clearer and more understandable in the light of the following description and embodiments, which will be described in more detail in the context of the drawings. This following description does not limit the invention on the contained embodiments. Same components or parts can be labeled with the same reference signs in different figures. In general, the figures are not for scale.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

- Fig. 1: is an overview of the structure and architecture of the system according to a preferred embodiment of the present invention;
- Fig. 2: is a flow chart of an update procedure according to a preferred embodiment of the present invention;
- Fig. 3: is schematic representation of a control device;
- Fig. 4a and Fig. 4b: is another flow chart of an alternative or more detailed update procedure, depicted in Fig. 2.

### DETAILED DESCRIPTION OF PREFERRED EMBODIMENTS

Generally, the method relates to a secure and reliable update procedure for a control device CD of a transportation system, like e.g. an elevator E.

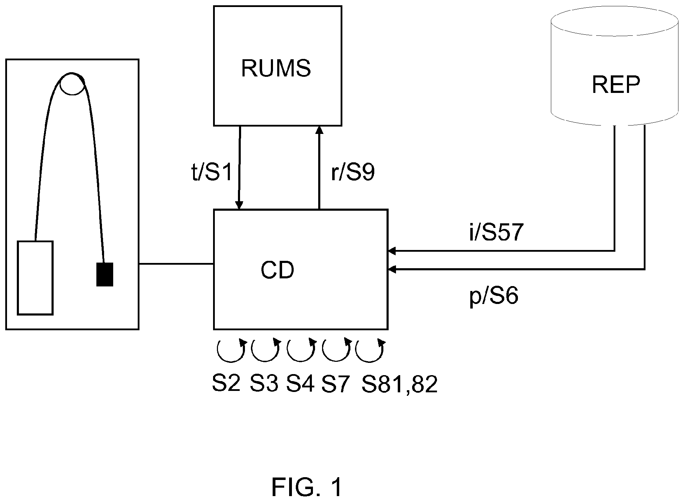

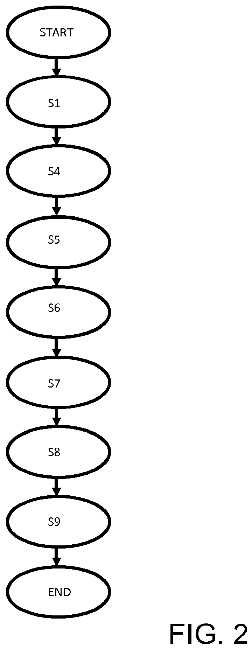

The overall structure is shown in **Fig. 1****.** The control device CD is adapted for controlling the elevator E and may be provided locally at the site of the elevator or directly in the control system of the elevator. The control device CD may also be deployed as wireless gateway node.
The control device CD is provided with a memory MEM for storing control software or control software packages for operating the control device CD. It further is provided with a processor P for executing the control software. The control device CD has a server interface SI to a server RUMS, which is adapted to control a software update procedure and a repository interface RI to a repository REP for storing packages of the control software. The processor P is adapted to execute a remote software update procedure according to the method which will be explained below with respect to Fig. 2.

**Fig. 2** shows an update procedure according to a preferred embodiment. After start of the procedure, in step S1 a trigger signal t is received from the server RUMS. With this step S1, the complete control and initiation of the update process is under control of the server RUMS. This is an important security feature, as it is avoided that other parties may instruct the control device CD by malware or malicious software to initiate an unauthorized update. Thus, it is ensured that nobody or no other entity apart from the server RUMS may send the trigger signal t. This is achieved by means of using an authentication procedure which may be based on X.509 certificates. With this it may be assured that all messages and (trigger) signals from a server are sent by the original and authorized server RUMS. All other messages or communication will be ignored.

In this embodiment, the method proceeds directly with step S4.

In step S4 a configuration file is updated. The configuration file comprises an indication of new software packages to be updated, comprising an indication of the version to be updated and an address in the repository REP, where this update version is accessible. The configuration file contains information required by the software update management system. It represents an actual status of the installation on the control device CD. The configuration file may be made available and transmitted to the server RUMS.

In step S5 an index file i is downloaded from the repository REP. The index file i contains a list of all available software packages, being available on the repository REP. In a preferred embodiment the index file i may additionally comprise a checksum or hash. Generally, a checksum is a sequence of numbers and letters used to check data for errors. If the checksum of an original file is known, the control device CD can use a checksum utility to confirm that its copy is identical. Typical checksum algorithms may be used, like MD5, SHA-1, SHA-256, and SHA-512. The algorithm uses a cryptographic hash function that takes an input and produces a string (a sequence of numbers and letters) of a fixed length. The input file can be a small 1 MB file or a massive 4 GB file.

In step S6 each software package, which is mentioned in the index list, is downloaded individually, if it has been determined that the package (in the respective version) does not already exist in the memory of the control device. The determination and download step may be implemented in a loop structure (for processing all packages in the index file). Step 6 thus comprises for each single package individually a comparison of the very package version with the versions already existent locally on the control device CD, so that a download operation is only triggered in case the version does not already exist. This evaluation by comparison (e.g. a look up in a data structure) is executed for each package before downloading the package and before initiating an installation request for the complete set of packages. In a preferred embodiment a retry mechanism is applied, when a download operation was evaluated as not successful (e.g. because of network connection failure or because of damaged file (segment) or due to other reasons). The retry mechanism may again be implemented by means of another loop structure for a pre-configured amount of iterations, e.g. 5 times such as if a download for a package failed, the download operation is re-tried for 5 times. If it has been evaluated that all the re-tries are not successful, in a first embodiment the method may directly proceed to step S8-1 without executing the download operations for the rest of the packages. In a second embodiment, a message is sent to the server RUMS. Both of these embodiments may be applied.

In step S7 for each downloaded package its integrity is checked individually in case it has been evaluated locally on the control device CD that the package in the required version does not already exist.

In step S8-1 it is verified for the complete set off packages and thus for all downloaded packages according to the update instruction, received with the trigger signal t, whether or not all the packages could have been downloaded without error or corruption or interruption (of the data connection). Only in case the complete set of packages is loaded successfully on the control device CD, an install instruction is generated to install the same locally on the control device CD in step S8-2. This verification may be implemented by yet another (a third) loop structure over all downloaded and received packages.

After all packages have been installed successfully, a report message r may be generated and may be prepared for being sent to the server RUMS in step S9.

Steps 6, 7 and 8 comprise an iteration (e.g. loop structure) until all packages are processed.

After this, the method may end or may be rerun.

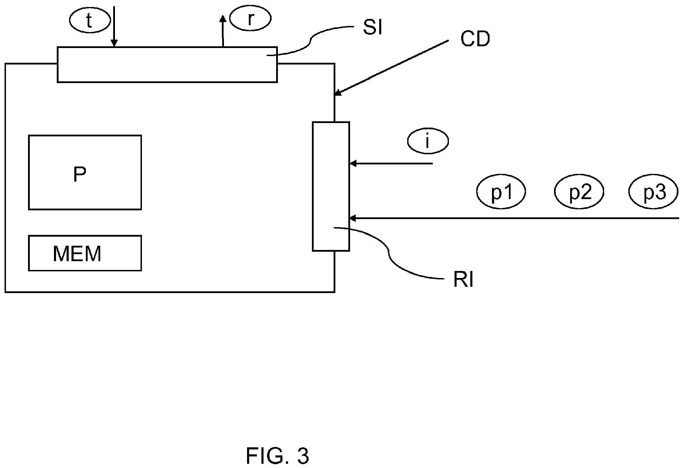

**Fig. 3** shows a structural overview of a control device CD. The control device CD comprises a server interface SI for communication with the server RUMS for receiving the trigger signal t and for sending the report message r. The server interface SI preferably is a wireless (e.g. ip-protocol based) interface. Alternatively, it may also be a plug-in card connection (e.g. sdcard) or a wired connection. Further the control device CD comprises a repository interface RI for communication with the repository REP. The repository interface RI serves to receive the index file i of the repository REP and the download of each package p1, p2, p3,.... The control device further comprises am memory for storing or buffering downloaded elements and a processor P for data processing.

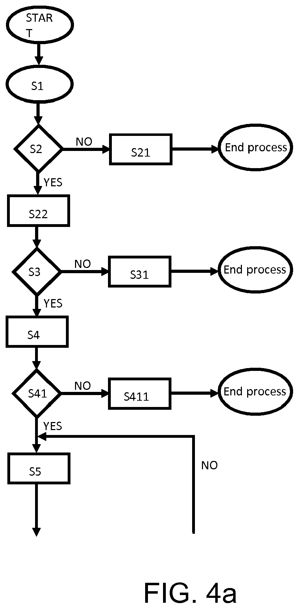

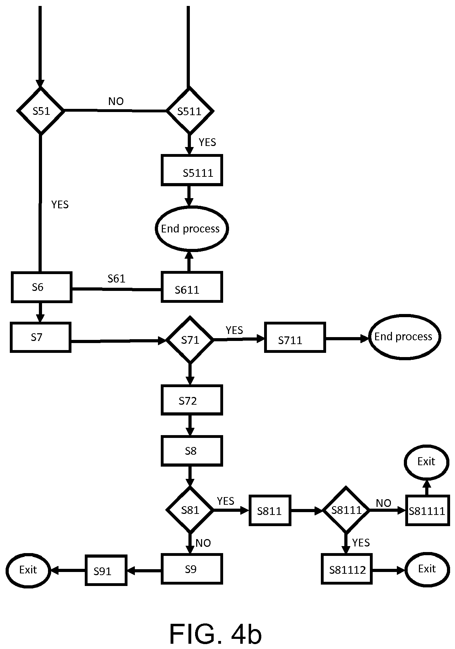

**Fig. 4** is a more detailed flow chart of a multi-step embodiment, which is portioned into **Fig. 4a** with the first part of the flow chart from the beginning/START to step S5 and into **Fig. 4b** with the second part of the same flow chart from step S5 to the end. The steps S1, S4, S6, S7, S8 and S9 correspond to the ones, already explained with respect to Fig. 2. Therefore, and for avoiding unnecessary repetitions, these steps are not mentioned again. So, after step S1, step 2 may be performed by checking if parameters (received in the previous step by means of the trigger signal) are valid. In particular, the syntactic correctness of the data may be evaluated (e.g. correct format, length, correct indication of the software/packages and correct indication of the repository REP). If evaluation in step S2 shows an invalidity, then in step S21 a "not OK" signal may be sent to the server RUMS and the process ends. If the evaluation is found to be valid, the method proceeds to step S22 for sending a "OK" confirmation signal to the server RUMS. In an alternative embodiment, only one of the steps S21, S22 may be executed.

In step S3 it is checked whether or not the repository REP is available for being accessed (e.g. data connection established and active, etc.). If the evaluation in step S3 is negative (repository not available), then an error message "software update failed" may be sent to the server RUMS in step S31 and the procedure may end. Otherwise (positive result, repository is available), the method may proceed with step S4.

In step S4 a configuration file is updated. The configuration file contains the software (package) versions to be updated and the new repository address (e.g. in the form of an URL link). The configuration file comprises information required by the software package management system. The configuration file may be prepared to be sent to the server RUMS.

In step S41 it is checked if the configuration file has been updated successfully. If NO, the method may issue an error message in step S411 and the method may end or if YES (successful update), the method may proceed to step S5.

In step S5 the index file is downloaded from the repository REP, which contains a list of available software packages of that repository REP.

In step S51 it is evaluated if the download of the index file in step S5 has been successful. If NO, in step S511 it is evaluated whether the download attempt already has been executed before for a configurable number of times (the number of admissible iterations may be configured in a configuration phase, e.g. five times). If the upper threshold (number of admissible iterations) has been reached, an error message will be generated in step S5111 and the process may end. If the evaluation in step S51 is YES (download successful) the method may proceed to step S6.

In step S6 the following steps are reiterated for each package listed in the index file:
- Compare the new version of package to be updated with the version, which is already installed locally on the device CD.
- If the version is not existent: Check if package is already in a temporary file folder of the memory MEM. If not: download the package to the temporary file folder. If the download fails, a retry mechanism may be initiated in step S61, which retires the download for a number of preconfigured times (e.g. 5 times according to a preset threshold). This provides an efficient upload procedure by ensuring that the consistency of the package versions of the set of packages for the software may be guaranteed. If all the retries failed, an error message ("Software update failed") may be issued in step S611.
- If the update fails, the failed packages are deleted again and the auto-update procedure is aborted. This has the technical effect, that it can be assured that the software package is always in a consistent state.
- The steps are re-iterated for each package in the index file list.

The method then proceeds to step S7. In step S7 the following steps are reiterated for each package listed in the index file:
- Check the integrity of each downloaded package
- In case the integrity is not sufficient (e.g. file corrupted), the respective package is deleted and it is continued with the next package in the index file;
- Otherwise the next package will be checked for integrity.

In step S71 it is checked if one or more of the packages are corrupted. If YES, in step S711 an error message "Update failed" will be generated and may be sent to the server RUMS, before ending the process. Otherwise (if all packages are OK and not corrupted), the method may proceed to step S72 for disabling a watchdog.

The watchdog may be a module or function which assures that no unintended changes to the control device CD may be performed. As soon as a change in the installation (runtime environment) is detected, the watchdog will issue a warning message. So, for installing a package, the watchdog mechanism needs to be disabled. After this the method may proceed to step S8.

In step S8 the following steps are reiterated for each package listed in the index file:
- An install instruction is performed for each package in the index file.
- If the installation (of one package) fails, an error flag is set and/or the error is written to a syslog data structure (for logging purposes) and the method continues with the next package.
- Otherwise (installation successful) the method continues with the next package, too.

In step S81 it is evaluated if all packages could have been installed successfully. If YES, in step S811 a message "update successful" is sent to the server RUMS. In step S8111 it is checked if a reboot_flag is set. If NO, the watchdog is enabled again in step S81111 before going to EXIT. Otherwise (if the reboot flag is not set) /YES, a reboot is initiated in step S81112 before going to EXIT.

If it is evaluated in step S81 that not all packages could have been installed successfully (NO), a message "update failed" may be sent in step S9 to the server RUMS. In step S91 the watchdog is enabled again before continuing with EXIT.

The steps S6 may correspond to a first control loop, step S7 to a second control loop and step S8 may be implemented to a third control loop.

In another embodiment it is also possible to instruct the control device CD for a dedicated update operation by including in the trigger signal information about the specific package version to be downloaded from the repository REP and a link or address for executing the download operation from the repository REP. In this embodiment, the control device CD needs not to check whether the downloaded package is new or already exists locally, because it will only be instructed by the server RUMS in case the package is new and needs to be downloaded. Thus, the step of comparison may be omitted. It only needs to be verified if all packages could have been downloaded as instructed before checking integrity and before proceeding to the installation and before sending the report of successful update to the server RUMS. In this embodiment, the consistency and/or dependency information is provided on the server RUMS. The consistency and/or dependency information may be provided in or with the trigger signal.

Generally, the interfaces can be embodied as a hardware interface or as a software interface (e.g. PCI-Bus, USB or Firewire). In general, the control device CD can comprise hardware elements and software elements, for example a microprocessor, a field programmable gate array (an acronym is "FPGA") or an application specific integrated circuit (an acronym is "ASIC"). The memory in the control device CD can be embodied as non-permanent main memory (e.g. random access memory - RAM) or as permanent mass storage (e.g. hard disk, USB stick, SD card, sol-id state disk).

The network or communication channels can be realized as a LAN (acronym for "local area network"), in particular a WiFi network, or any other local connection, e.g. via Bluetooth or USB (acronym for "universal serial bus"). The network can also be realized as a WAN (acronym for "wide area network"), in particular the network can be identical with the internet and may be based on an IP protocol. The network can alternatively also be realized as a VPN (acronym for "virtual private network").

The repository REP may be a database or can be contained in a memory of a server, or it can be stored on a separate storage unit. The repository REP and the server RUMS may be in data connection.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality.

A single unit or device may fulfil the functions of several items recited in the claims. The mere fact that certain measures are recited in mutually different dependent claims does not indicate that a combination of these measures cannot be used to advantage.

The system for secure and remote update of a control device in accordance with the method as described above can be implemented as program code means of a computer program and/or as dedicated hardware.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Processes or steps, which have been described with respect to FIG. 2 and/or 4 are computer-implemented and may be embodied as software and/or hardware. At least some steps of the present invention may also be practiced in distributed computing environments where tasks are performed by remote processing devices linked through a communications network. In a distributed computing environment, program modules may be located in local and/or remote memory storage devices.

The processor P may execute machine-executable instructions to effect one or more aspects of the present invention. At least a portion of the machine executable instructions may be stored (temporarily or more permanently) on the storage devices and/or may be received from an external source via an input interface.

Any reference signs in the claims should not be construed as limiting the scope.

Wherever not already described explicitly, individual embodiments, or their individual aspects and features, described in relation to the drawings can be combined or exchanged with one another without limiting or widening the scope of the described invention, whenever such a combination or exchange is meaningful and in the sense of this invention. Advantageous which are described with respect to a particular embodiment of present invention or with respect to a particular figure are, wherever applicable, also advantages of other embodiments of the present invention.

## Claims

1. Method for reliably and remotely updating a control device (CD) for controlling a people transportation system operated with control software, wherein for updating the control software packages are stored and provided on a repository (REP) and wherein the update is controlled by a server (RUMS), which is informed about the current status of the packages, being installed on the control device (CD), comprising the method steps of being executed on the control device (CD):
- Receiving (S1) a trigger signal (t) from the server (RUMS), wherein the trigger signal (t) comprises an update instruction for a set of packages to be updated from the repository (REP;
- Determining for each package if that package does not already exist on the control device (CD) and if not: Downloading (S6) each package from the repository (REP) individually until all packages are downloaded, thereby checking integrity (S7) of each downloaded package;
- Verifying (S8-1) if all packages of the set of packages have been downloaded successfully as instructed and checking its integrity and in the affirmative:
- Installing (S8-2) all downloaded and checked packages;
- Sending (S9) a report message (r) to the server (RUMS).

2. Method according to claim 1, wherein downloading (S6) each package individually is executed such as a retry mechanism is applied, wherein the retry mechanism instructs another download operation from the repository (REP) for the respective package in case the respective package was not downloaded correctly and wherein the retry mechanism may be re-iterated for a number of pre-configured times for each package.

3. Method according to any of the preceding claims, wherein after receiving (S1) the trigger signal (t), the method further comprises:
- Checking (S2) if update parameters are valid.

4. Method according to any of the preceding claims, wherein after receiving (S1) the trigger signal (t), the method further comprises:
- Checking (S3) if the repository (REP) is available.

5. Method according to any of the preceding claims, wherein after receiving (S1) the trigger signal (t), the method further comprises:
- Updating (S4) a configuration file locally at the control device (CD), providing instructions for the downloading (S6) from the repository (REP).

6. Method according to any of the preceding claims, wherein after receiving (S1) the trigger signal (t), the method further comprises:
- Downloading (S5) an index file (i) with a list of available packages from the repository (REP).

7. Method according to any of the preceding claims, wherein after installing (S8-2) the method further comprises:
- Rebooting (S10) the control device (CD).

8. Method according to any of the preceding claims, wherein a watchdog, which is deployed on the control device (CD) for preventing unintended software changes is disabled before installing (S8-2) the packages and enabled again after all packages have been completely and correctly installed.

9. Method according to any of the preceding claims, wherein the watchdog is only disabled in case it has been verified (S8-1) in a preceding verification step (S8-2) that all packages which have been downloaded show integrity and are not corrupted.

10. Method according to any of the preceding claims, wherein after each or selected steps (S1, S2, S3, S4, S5, S6, S7, S8-1, S8-2) a confirmation signal is sent to the server (RUMS) in case the step has been executed completely and correctly.

11. Method according to any of the preceding claims, wherein at least the trigger signal (t) and/or the report message (r) comprise a clock segment.

12. Control device (CD) for a people transportation system, wherein the control device (CD) is operated with control software, comprising:
- A memory (MEM) for storing control software for operating the control device (CD);
- A processor (P) for executing the control software;
- A server interface (SI) to a server (RUMS), wherein the server (RUMS) is adapted to control a software update procedure;
- A repository interface (RI) to a repository (REP) for storing update packages of the control software;
- wherein the processor (P) is further adapted to execute a reliable and remote software update procedure according to the method of any of the preceding method claims above.

13. System for a reliable and remote update of control software on a control device, with:
- A control device (CD) according to the preceding claim;
- A server (RUMS), which is adapted to trigger the update procedure and is informed about the current status of the software update packages, being installed on the control device (CD);
- A repository (REP), which is adapted to store update packages.

14. A computer program product comprising program elements which induce processor to carry out the steps of the method for reliable and remote update of control software according to one of the preceding method claims, when the program elements are loaded into a memory of the processor.

15. A computer-readable medium on which program elements are stored that can be read and executed by a processor, in order to perform steps of the method for a reliable and remote software update procedure according to one of the preceding method claims, when the program elements are executed by the processor.
